# FASCICULE DE BREVET EUROPEEN

(11) **EP 1 988 001 B1**
(45) Date de publication et mention de la délivrance du brevet: **27.07.2011**
(21) Numéro de dépôt: 08305067.4
(22) Date de dépôt: 25.03.2008
(51) Int. Cl.: B62B 1/20

(54) **Brouette ou analogue empilable par sous-éléments prémontés**
Durch vormontierte Unterelemente stapelbare Schubkarre oder Ähnliches
Wheelbarrow or similar stackable by preinstalled sub-elements

(30) Priorité: 25.04.2007 FR 0754686
(43) Date de publication de la demande: 05.11.2008
(73) Titulaire: Haemmerlin SAS, 67700 Monswiller (FR)
(72) Inventeur: Devynck, Gabriel, 67206 Mittelhausbergen (FR); Pitisi, Christian, 67640 Lipsheim (FR)
(74) Mandataire: Nuss, Pierre

(56) Documents cités:
- EP-A- 0 895 919
- EP-B- 0 522 987
- FR-A- 2 717 761
- US-A- 6 095 535

## Description

La présente invention concerne le domaine des véhicules de manutention, notamment du type brouette, et a pour objet une brouette ou analogue démontable et empilable par sous-éléments prémontés.

Actuellement le stockage et la livraison des brouettes ou de dispositifs de manutention similaires sont généralement réalisés selon deux modes de conditionnement différents, à savoir, soit en pièces détachées, rassemblées prêtes au montage dans des contenants ou stockées séparément par types de pièces, soit sous forme de dispositifs entièrement montés prêts à l'emploi.

Or, chacun de ces deux modes de stockage et de livraison présente des inconvénients majeurs.

En effet, en cas de livraison en pièces détachées, le revendeur ou l'utilisateur, selon le cas, est obligé d'assembler, en plusieurs opérations de montage, généralement par boulonnage, l'ensemble desdites pièces, nécessitant souvent des outils et/ou des appareillages spécialisés, ainsi qu'une expérience et une dextérité plus ou moins importantes. En outre, la qualité du montage et donc du produit monté dépend entièrement des facteurs précités.

Par ailleurs, le stockage de brouettes ou de dispositifs de manutention entièrement montés est très encombrant et génère, notamment, des frais de transport importants. De plus, un gerbage en grand nombre est difficile à réaliser et crée des piles de brouettes ou de dispositifs de manutention similaires très délicates à manipuler, notamment dans le cas d'une palettisation.

En outre, les roues de ces brouettes ou analogues sont fixées généralement au châssis correspondant au moyen de paliers métalliques ou en matière plastique rigide comportant le plus souvent une carcasse coulée ainsi que, le cas échéant, des bagues de frottement et/ou des roulements et leur montage sur le châssis est relativement long, de sorte que leur démontage en vue d'un remplacement est généralement difficile à réaliser. De ce fait, un démontage pour un simple stockage n'est généralement pas envisagé.

Pour obvier à ces inconvénients, il a été proposé, par EP-B-0 522 987, une brouette ou analogue, démontable et empilable à l'état démonté, essentiellement constituée par un ensemble caisse et brancards, par un ensemble pieds et paliers de roue, ces deux ensembles étant reliés entre eux de manière démontable par l'intermédiaire d'axes de pivotement du type vis-écrou, et par une roue munie d'un axe démontable.

Une telle brouette peut être rapidement et facilement montée et démontée et permet l'obtention d'un encombrement particulièrement réduit, pour le stockage et le transport.

Cependant, l'ensemble caisse et brancards reste généralement relié à l'ensemble pieds et paliers de roue en position démontée pour le stockage ou le colisage en formant, certes, un ensemble plus compact, mais qui s'étend sur une longueur relativement importante. Cette disposition est choisie pour éviter à l'utilisateur final ou au vendeur d'avoir à effectuer une opération d'assemblage avec des outils.

On connaît également, par FR-A-2 717 761, qui est considérée comme représentant l'état de la technique le plus proche et qui divulgue toutes les charactéristiques du préambule de la revendication 1, et par EP-A-0 895 919 une brouette empilable par sous-éléments prémontés, essentiellement constituée par un ensemble de caisse et de brancards, par un ensemble de pieds et de paliers de roue et par une roue démontable, l'ensemble de caisse et de brancards étant muni de moyens d'assemblage avant et arrière, respectivement par déformation élastique et coopération de forme, cesdits moyens étant destinés à coopérer avec des moyens correspondants de l'ensemble de pieds et de paliers de roue et la roue étant pourvue d'un axe de montage sans outil sur les pieds.

Cependant, l'axe de montage sans outils est fixé dans des logements élastiquement déformables, qui présentent l'inconvénient de perdre leur propriété de déformation élastique avec le vieillissement, de sorte qu'un maintien correct de la roue ne peut plus être assuré, en particulier en cas de choc avec un obstacle.

La présente invention a pour but de pallier les inconvénients subsistant dans ce dernier mode de réalisation en proposant une brouette ou analogue démontable et empilable par sous-éléments prémontés pouvant être rapidement et facilement montée et démontée, sans outillage spécial, et permettant l'obtention d'un encombrement particulièrement réduit, pour le stockage et le transport.

Elle a, en effet, pour objet une brouette ou analogue empilable par sous-éléments prémontés, essentiellement constituée par un ensemble de caisse et de brancards, par un ensemble de pieds et de paliers de roue et par une roue démontable, l'ensemble de caisse et de brancards étant muni de moyens d'assemblage avant et arrière, respectivement par déformation élastique et coopération de forme, destinés à coopérer avec des moyens correspondants de l'ensemble de pieds et de paliers de roue et la roue étant pourvue d'un axe de montage sans outil sur les pieds, caractérisée en ce que l'axe de montage sans outil de la roue sur les pieds est du type à engagement et à maintien dans les paliers correspondants par coopération de forme et se présente sous la forme d'une tige cylindrique pourvue à une extrémité libre d'une tête de dimension supérieure au diamètre de ladite tige, la tête étant pourvue d'un moyen de maintien de la roue en position de montage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale, partiellement en coupe, d'une brouette conforme à l'invention ;
la figure 2 est une vue en perspective de la brouette renversée ou positionnée à l'envers et sans roue selon l'invention ;
la figure 3 est une vue en perspective de la brouette à l'envers avec sa roue démontée et un premier mode de réalisation d'un axe de montage de cette dernière ;
la figure 4 est une vue partielle en coupe et à plus grande échelle représentant le montage de la roue suivant la figure 3 ;
la figure 5 est une vue analogue à celle de la figure 4 d'un autre mode de réalisation de l'axe de montage de la roue ;
la figure 6 est une vue en perspective des pieds lors du montage de la roue amovible sur ce dernier au moyen d'un axe selon un troisième mode de réalisation ;
la figure 7 est une vue identique à celle de la figure 6 dans laquelle la roue est en position montée ;
les figures 8A, 8B et 8C sont des vues en perspective représentant les trois étapes de montage successives de la roue sur les paliers de roue au moyen de l'axe selon le troisième mode de réalisation ;
les figures 9A et 9B sont des vues en coupe longitudinale selon deux plans perpendiculaire entre eux de l'axe de la roue suivant les figures 8A, 8B et 8C ;
la figure 10 est une vue en perspective des paliers de roue suivant les figures 6 à 9 ;
les figures 11 et 12 sont des vues agrandies des moyens d'assemblage de l'ensemble de pieds et de paliers de roue démontable sur l'ensemble de caisse et de brancards selon l'invention,
les figures 13A et 13B sont des vues en perspective et en coupe de deux variantes de réalisation d'un moyen d'assemblage de l'ensemble de caisse et de brancards avec l'ensemble de pieds et de paliers de roue ;
la figure 14 est une vue en perspective d'une traverse fixée contre la paroi inférieure arrière de la caisse 2 de la brouette selon l'invention et comprenant également un moyen d'assemblage de l'ensemble de caisse et de brancards avec l'ensemble de pieds et de paliers de roue;
la figure 15 représente une brouette selon l'invention dans un état démonté et mise en position d'empilement ;
les figures 16A et 16B sont des vue en perspective de détails de la figure 12, et
les figures 17A et 17B sont des vues en perspective et en coupe d'un empilement de brouettes démontées selon l'invention.

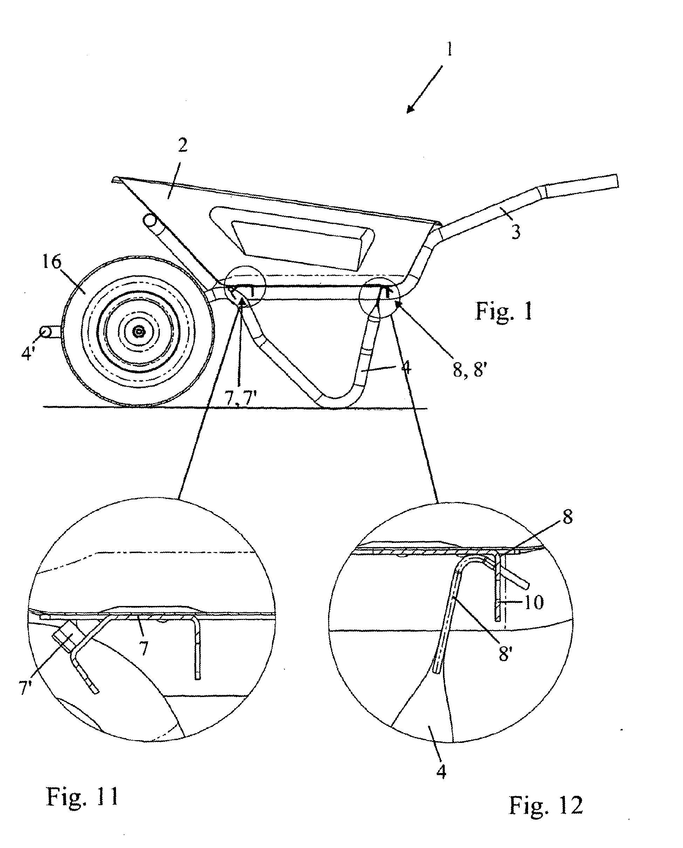

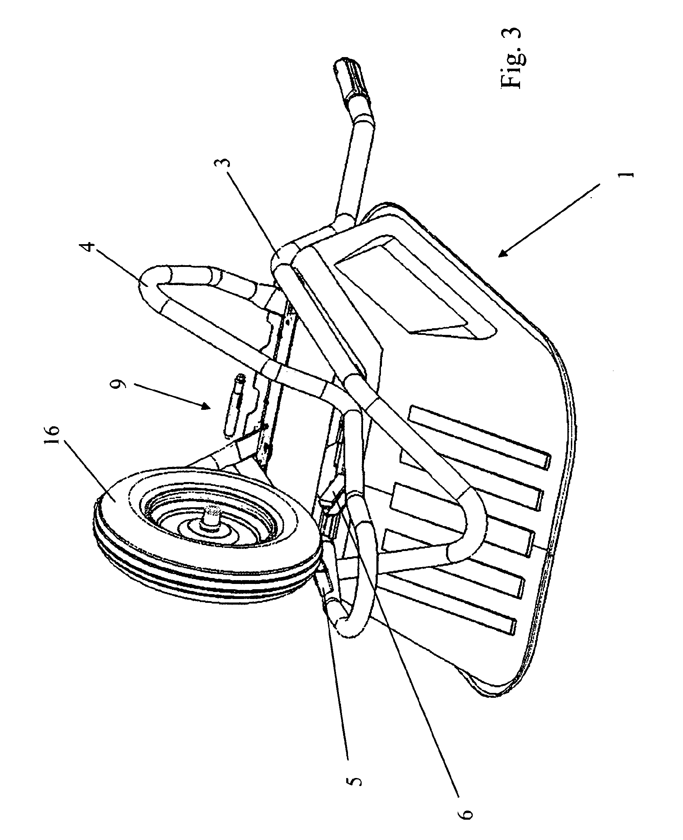

Les figures 1 et 3 des dessins annexés représentent une brouette 1 ou analogue selon l'invention, empilable par sous-éléments prémontés, essentiellement constituée par un ensemble de caisse 2 et de brancards 3, par un ensemble de pieds 4 et de paliers de roue 5, 6 et par une roue 16 démontable. L'ensemble de caisse 2 et de brancards 3 est muni de moyens d'assemblage avant et arrière 7 et 8, respectivement par déformation élastique et coopération de forme, destinés à coopérer avec des moyens 7', 8' correspondants de l'ensemble de pieds 4 et de paliers de roue 5, 6 et la roue 16 est pourvue d'un axe 9 de montage sans outil sur les pieds 4.

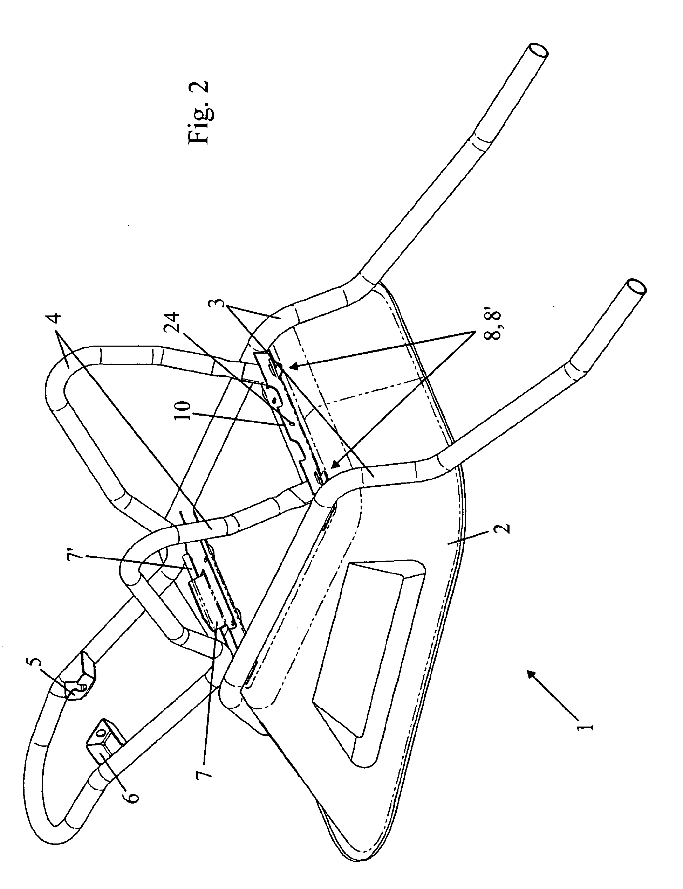

Conformément à l'invention et comme le montrent plus particulièrement, à titre d'exemples, les figures 2 à 10 des dessins annexés, l'axe 9 de montage sans outil de la roue 16 sur les pieds 4 est du type à engagement et à maintien dans les paliers correspondants par coopération de forme. Ainsi, la brouette 1 selon l'invention peut être facilement montée et ceci, sans outils. De cette manière, le conditionnement sous la forme de sous-éléments prémontés peut être envisagé, étant donné que le montage de ladite brouette 1 par l'utilisateur final ou le vendeur ne nécessite pas de dextérité particulière, et surtout aucun outil.

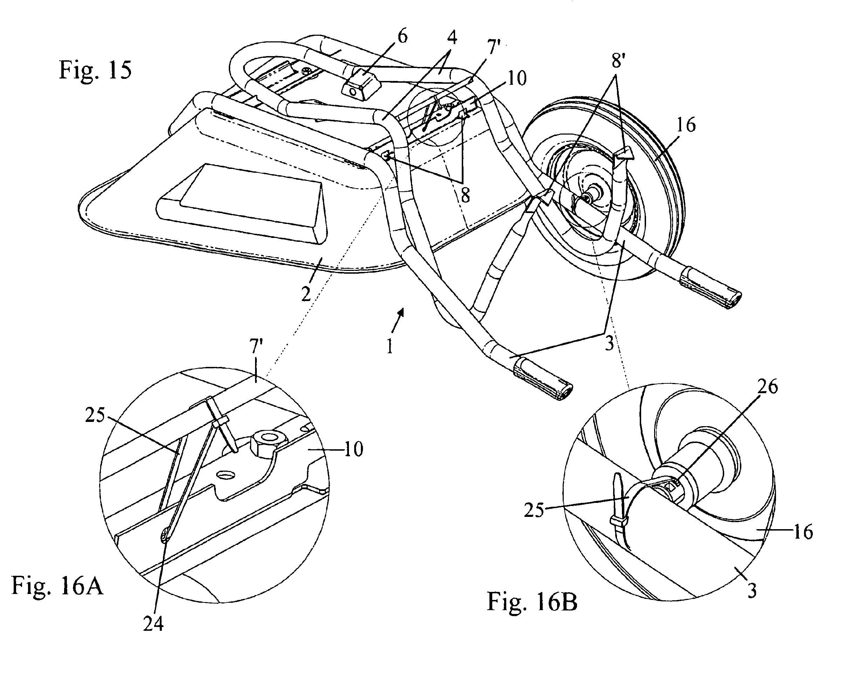

Le fait de disposer d'une roue 16 démontable ou amovible permet, en outre, d'optimiser l'empilement ou le gerbage de brouettes 1 selon l'invention. L'empilement de plusieurs brouettes 1 et la disposition des différents sous-éléments desdites brouettes 1 destinées à être empilées sont représentés plus particulièrement aux figures 15, 16A, 16B, 17A et 17B, décrites plus loin.

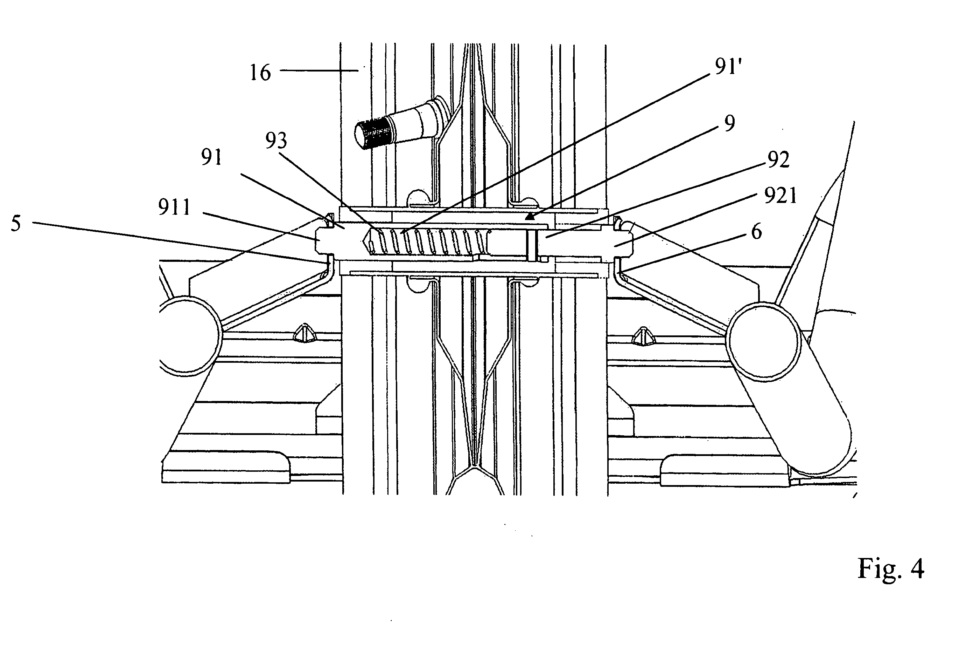

Comme le montrent les figures 3 et 4 des dessins annexés, l'axe 9 de montage sans outil de la roue 16 se présente avantageusement sous forme d'un axe télescopique constitué par un premier élément 91 muni d'un logement borgne 91' et par un deuxième élément 92 guidé de manière coulissante dans le logement borgne 91', contre l'action d'un ressort de rappel 93, chaque élément 91 et 92 étant muni à son extrémité libre d'un ergot 911, respectivement 921 destiné à coopérer avec le palier de roue 5 ou 6 correspondant. Ainsi, comme il apparaît plus particulièrement à la figure 4 des dessins annexés, par compression du ressort de rappel 93 dans le logement 91', par application d'une pression sur les extrémités des éléments 91 et/ou 92, les ergots 911 et 921 peuvent être disposés entre les paliers de roue 5 et 6 correspondants et le relâchement de la pression permet, par l'action du ressort de rappel 93, d'insérer lesdits ergots 911 et 921 dans lesdits paliers de roue 5 et 6.

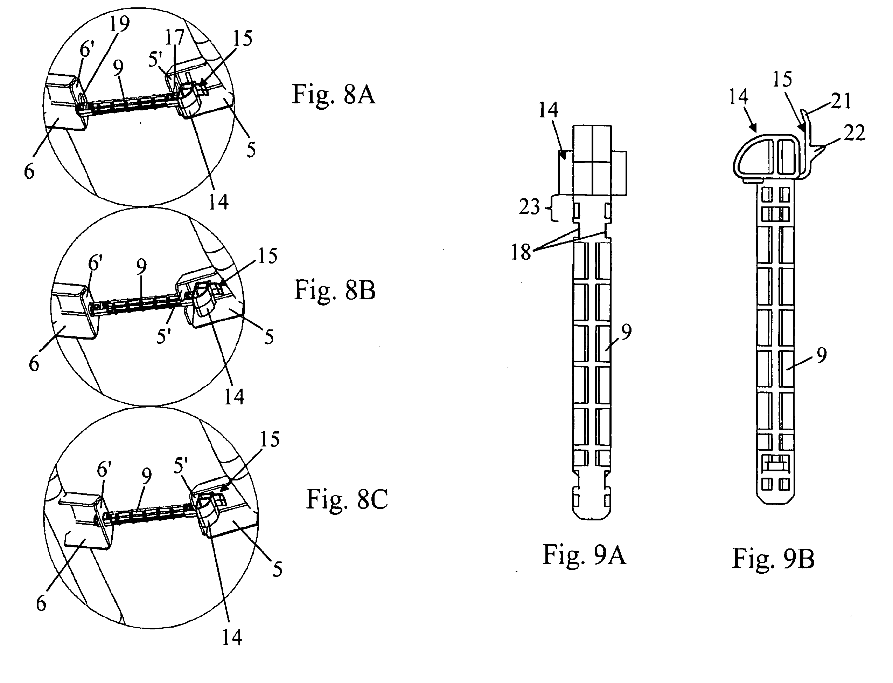

Les paliers 5 et 6 peuvent être constitués par de simples logements cylindriques traversant (non représentés) ou encore sous forme de logements partiellement ouverts vers le bas, en position de service de la brouette, les ergots coopérant alors, en position de montage, avec un élément d'arrêt en saillie au-dessus de l'ouverture sur la face externe des paliers 5 et 6. De tels logements seraient comparables à ceux décrits plus loin à propos des figures 8 à 10.

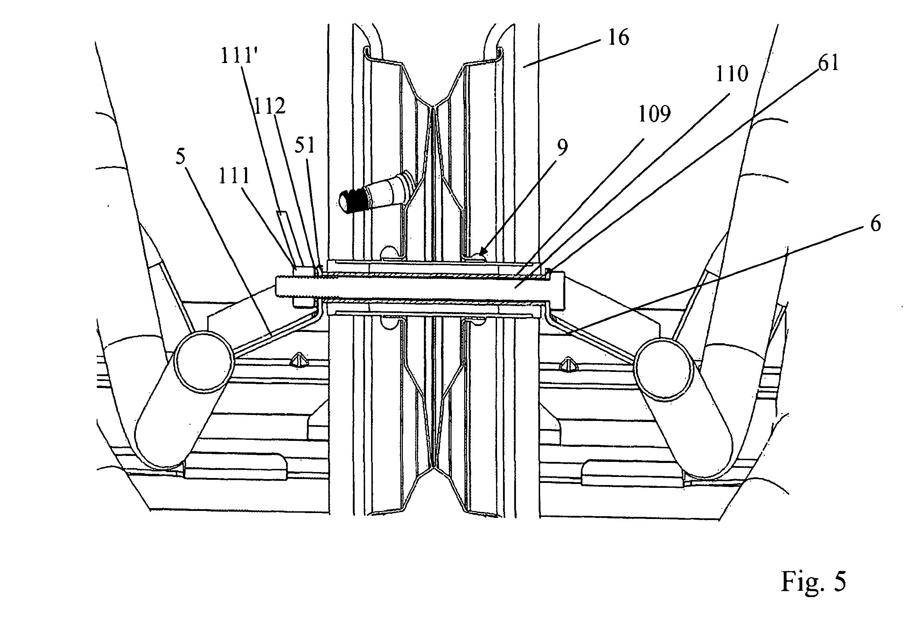

Dans la figure 5 des dessins annexés l'axe 9 de montage sans outil de la roue 16 est constitué par un ensemble entretoise 109 - vis 110 - écrou 111, dont la tête de vis 110' s'appuie, en position de service, contre la face externe du palier 5 et dont l'écrou 111 s'appuie contre la face externe du palier 6, avec interposition d'une rondelle 112. Un tel ensemble peut très facilement être mis en place après introduction préalable de l'entretoise 109 dans le moyeu de la roue 16 et insertion de la vis 110 dans ladite entretoise. A cet effet, les paliers 5 et 6 sont ouverts vers le bas en position de service de la brouette et présentent, de part et d'autre de leur ouverture, un rebord 51, 61 en saillie sur leur face externe, l'écrou 111 étant muni d'un levier de manoeuvre manuelle 111'. Pour son montage, la roue est approchée des paliers 5 et 6 pour que l'extrémité libre de la vis 110 soit introduite dans le palier correspondant 5, puis l'extrémité opposée de la vis 110 est introduite dans le palier 6. Ensuite, la tête de vis 110' est poussée contre la face externe du palier 6, sous le rebord 61 et l'écrou 111 est serré manuellement au moyen de son levier de manoeuvre 111' pour appliquer la rondelle 112 à force contre la face externe du palier 5, sous le rebord 51. Il s'ensuit que la roue 16 est alors parfaitement retenue et maintenue dans les paliers 5 et 6.

Bien entendu, il est également possible de réaliser le montage de la roue 16 avec l'ensemble entretoise 109 - vis 110 - écrou 111 dans de simples paliers sous forme de trous traversant, la vis et l'écrou étant alors mis en place séparément suivant une procédure de montage habituelle.

Les figures 9A et 9B des dessins annexés représentent la réalisation de l'invention, dans laquelle, l'axe 9 de montage sans outil de la roue 16 de la brouette 1 se présente sous la forme d'une tige cylindrique pourvue à une première extrémité libre d'une tête 14 de dimension supérieure au diamètre de ladite tige, la tête 14 étant pourvue d'un moyen de maintien 15 de la roue 16 en position de montage. Ce moyen de maintien 15 est destiné à fixer l'axe 9 en position de montage de la roue 16, en empêchant ce dernier de se déplacer en translation et rotation par rapport aux paliers de roue 5, 6.

En vue du montage facile et amovible de la roue, les extrémités libres de la tige formant l'axe 9 de montage sans outil de la roue 16 peuvent coopérer avec les paliers de roue 5, 6 réalisés sous la forme de deux logements, comprenant chacun une face de montage 5', 6' perpendiculaire à l'axe 9 de montage sans outil de la roue 16 en position de service et avec laquelle coopère une extrémité libre correspondante de l'axe 9.

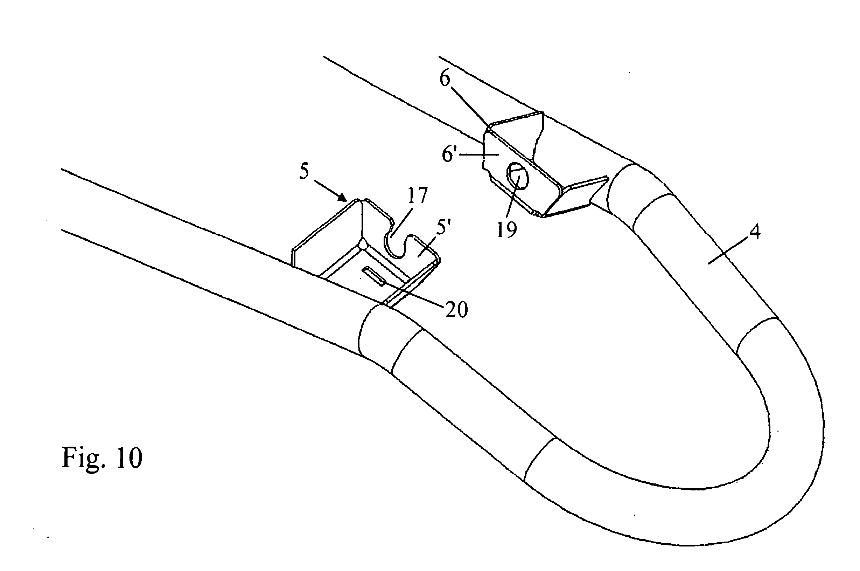

Les figures 8A à 8C et 10 représentent plus particulièrement ces paliers de roue 5, 6. La face de montage 5' du premier 5 des paliers de roue 5, 6 peut former un palier semi-ouvert réalisé par un perçage débouchant 17 vers le bas en position de service et destiné à coopérer avec des méplats 18 prévus sur la tige formant l'axe 9 de montage sans outil de la roue 16, la longueur de la partie de tige 23 située entre le bord des méplats 18 tourné vers la tête 14 et le côté correspondant de la tête 14 étant au moins égale à la largeur desdits méplats 18 et la face de montage 6' du second 6 desdits paliers de roue 5, 6 peut présenter un perçage 19 de diamètre correspondant à celui de la seconde extrémité libre de la tige formant l'axe 9 de montage sans outil de la roue 16.

De manière avantageuse, le moyen de maintien 15 de la roue 16 en position de montage peut être un dispositif à encliquetage coopérant avec un moyen 20 correspondant prévu dans la paroi supérieure du logement du premier palier 5 concerné. De préférence, et comme représenté en détails à la figure 9B, le dispositif à encliquetage formant le moyen de maintien 15 de la roue 16 en position de montage peut comprendre une patte 21 à déformation élastique avec une partie en saillie 22 coopérant avec un logement en creux formant le moyen 20 réalisé dans la paroi supérieure du logement du premier palier 5.

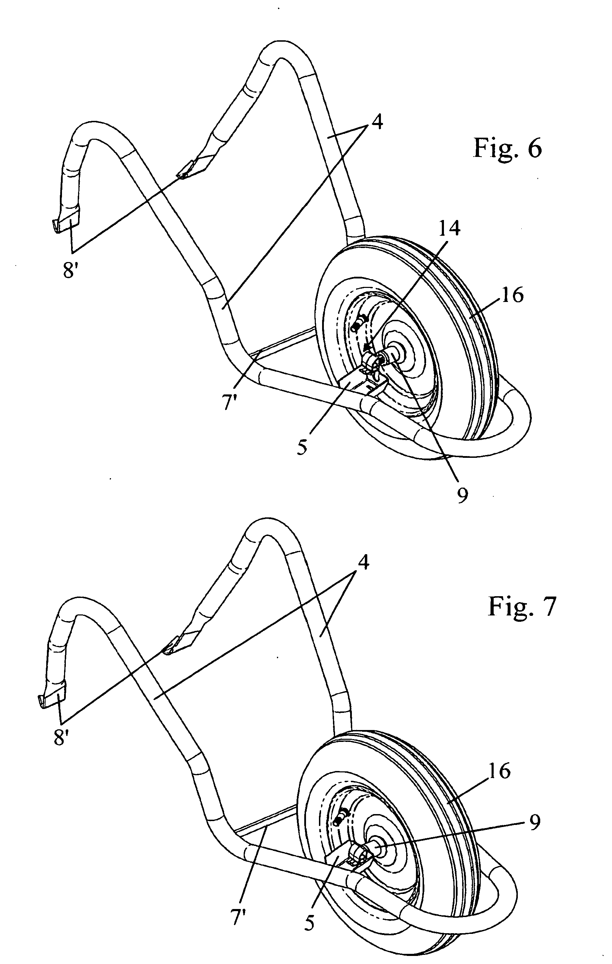

Dans ces conditions, le montage de la roue 16 amovible peut être réalisé en effectuant les étapes suivantes, par exemple :
- positionner les pieds 4 dans la position représentée aux figures 6 et 7, de telle manière que l'ouverture des paliers de roue 5, 6 est orientée vers le haut (position à l'envers par rapport à la position de service),
- approcher la roue 16 de telle manière que l'axe 9 se trouve sensiblement au-dessus des paliers de roue 5, 6 (voir figure 6),
- introduire la partie de la tige formant l'axe 9 comportant les méplats 18 dans le perçage débouchant 17 du palier semi-débouchant 5 (voir figure 8A),
- réaliser une translation de ladite tige 9 de sorte à introduire la seconde extrémité libre de cette dernière dans le perçage 19 correspondant du palier de roue 6 (voir figure 8B).

Cette dernière étape permet l'engagement de la partie 22 en saillie de la patte 21 du moyen de maintien 15 dans le logement en creux 20 correspondant et donc le verrouillage de l'axe 9 de la roue 16.

Etant donné que la longueur de la partie de tige 23 située entre le bord des méplats 18 tourné vers la tête 14 et le côté correspondant de la tête 14 est au moins égale à la largeur desdits méplats 18, il est assuré que la paroi du perçage débouchant 17 ou le palier débouchant est en contact avec le maximum de surface de la tige formant l'axe 9 de montage sans outil de la roue 16, de sorte que l'ensemble ainsi monté soit mécaniquement stable.

Pour retirer la roue 16, il suffit de libérer le moyen de maintien 15 en soulevant la patte 21 de manière à extraire la partie en saillie 22 du logement en creux 20 et à réaliser les étapes précitées dans l'ordre inverse.

Les pieds 4 et les brancards 3 peuvent être réalisés par un tube d'un seul tenant plié symétriquement par rapport à un axe longitudinal et les paliers de roue 5, 6 peuvent être fixés sur le tube formant les pieds 4, près de son anse de pliage (voir les figures 6, 7 et 10).

Selon l'invention et de manière caractéristique, les extrémités libres des pieds 4 peuvent être sous la forme de crochets 8' constituant le moyen d'assemblage destiné à coopérer par forme avec le moyen d'assemblage 8 de l'ensemble de caisse 2 et de brancards 3 réalisé sous la forme de deux ouvertures 8 correspondantes réalisées dans une traverse 10 fixée contre la paroi inférieure arrière de la caisse 2 entre les deux brancards 3. L'insertion des crochets 8' dans les ouvertures correspondantes peut être réalisée sans outil.

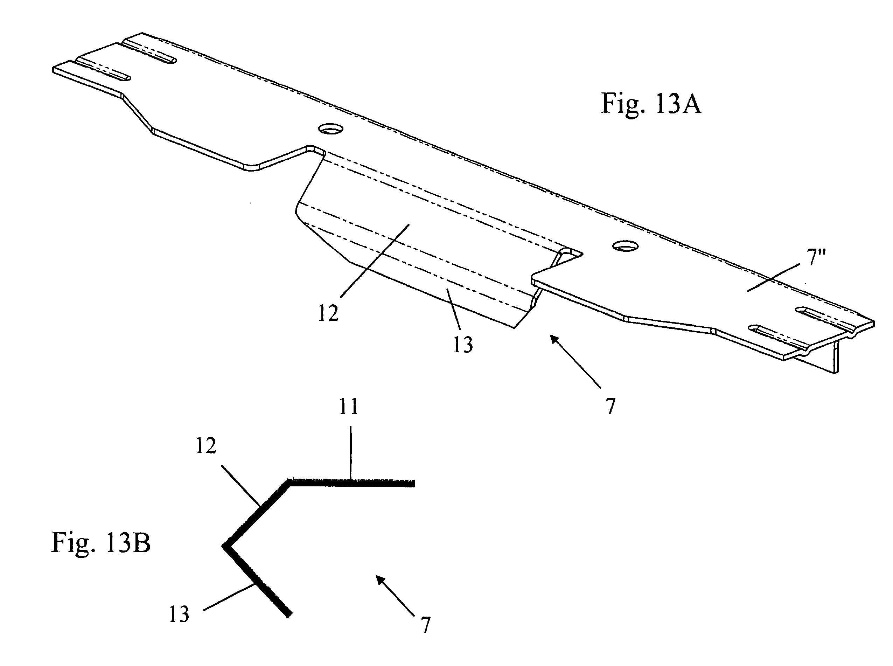

De préférence, les pieds 4 peuvent comprendre une traverse 7' formant le moyen d'assemblage destiné à coopérer par déformation élastique avec une languette élastique 7 fixée sous l'avant de la caisse. Cette languette élastique 7 peut se présenter (voir fig. 13B) sous la forme d'un profilé comportant au moins trois segments, à savoir un segment 11 destiné à la fixation du profilé à la caisse 2, un segment 12 de calage contre lequel la traverse 7' des pieds 4 exerce une contrainte en position de service de la brouette 1, et un segment 13 de guidage de la traverse 7' lors du montage de l'ensemble de pieds 4 et de paliers de roue 5, 6 sur l'ensemble de caisse 2 et de brancards 3.

Par position de service, il faut comprendre la position dans laquelle la brouette 1 est utilisée.

En variante, et de manière préférée, cette languette élastique 7 peut également être reliée à ou d'un seul tenant avec une traverse 7" fixée sous l'avant de la caisse, et comporter deux segments, à savoir un segment 12 de calage contre lequel la traverse 7' des pieds 4 exerce une contrainte en position de service de la brouette 1, et un segment 13 de guidage de la traverse 7' lors du montage de l'ensemble de pieds 4 et de paliers de roue 5, 6 sur l'ensemble de caisse 2 et de brancards 3. La figure 13A représente une telle traverse 7" destinée à être fixée sous l'avant de la caisse et intégrant une languette élastique 7.

Le montage des pieds 4 sur l'ensemble de caisse 2 et de brancards 3 peut ainsi être effectué en réalisant les étapes suivantes, par exemple :
- renverser l'ensemble de caisse 2 et de brancards 3 dans la position représentée à la figure 2,
- introduire les crochets 8' des pieds 4 dans les ouvertures 8 correspondantes de la traverse 10 (voir figure 12), et
- exercer une force de poussée vers le bas sur les pieds 4, au niveau de l'anse de pliage du tube formant ces derniers de manière à caler la traverse 7' des pieds 4 contre le segment 12 de calage de la languette élastique 7 (voir figure 11).

Bien entendu, ce montage peut être réalisé aussi bien avec que sans la roue 16.

De manière caractéristique, l'angle formé par le segment 12 de calage avec le fond de la caisse 2 peut être un angle aigu et le segment 13 de guidage de la traverse 7' peut former sensiblement un angle droit avec le segment 12 de calage et s'étendre en direction de l'arrière de la brouette 1 en position de service, comme cela est représenté sur les figures 2, 13A et 13B.

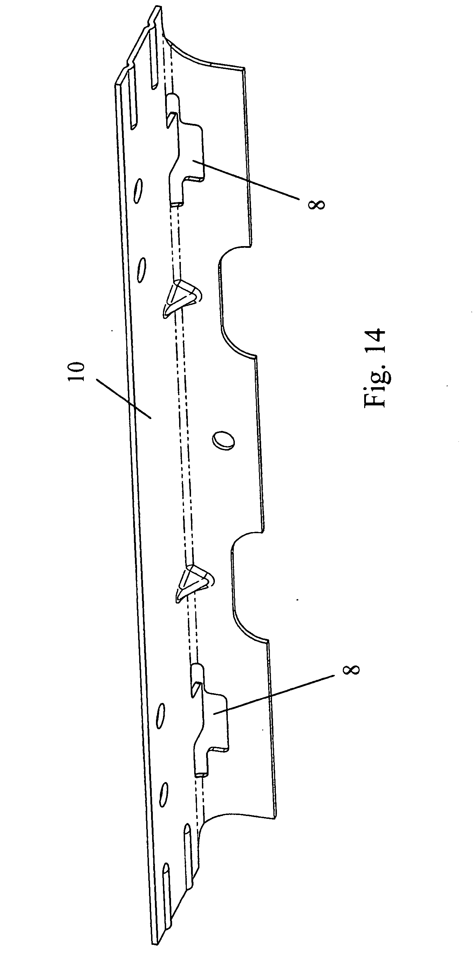

Pour garantir le maintien en position montée des pieds sur l'ensemble de caisse 2 et de brancards 3, l'écartement entre les crochets 8' et la traverse 7' des pieds sera de préférence choisie de manière à être légèrement plus faible que l'écartement entre les ouvertures 8 de la traverse 10 et le côté du segment 12 de calage de la languette élastique 7, adjacent à la traverse 7', destiné à être fixé sous l'avant de la caisse 2 ou au segment 11 destiné à la fixation de la languette élastique 7 à la caisse 2. De plus, la traverse 10 fixée contre la paroi inférieure arrière de la caisse 2 peut présenter une forme telle que celle représentée à la figure 14, à savoir un profilé avec deux ailes sensiblement en angle droit. De cette manière, les pieds 4 sont sollicités de telle sorte que les extrémités libres des crochets 8' reposent contre une aile de ladite traverse 10 et la traverse 7' des pieds 4 est plaquée contre le segment 12 de calage de la languette élastique 7.

La forme spécifique de la languette élastique 7 décrite plus haut permet, lors du déchargement de la brouette 1 selon l'invention, en prenant appui sur un butoir 4' réalisé par l'anse de pliage des pieds 4, d'éviter le décrochement de l'ensemble de caisse 2 et de brancards 3, étant donné que la traverse 7' des pieds 4 forme une butée contre laquelle repose ou bute le segment 12 de calage de la languette élastique 7 lors du déchargement.

Comme le montrent les figures 15, 16A, 16B, 17A et 17B, la brouette 1 ou analogue conforme à l'invention peut être démontée en des sous-éléments simples et empilables.

La figure 15 représente une brouette 1 dans une disposition dans laquelle elle peut être empilée sur d'autres brouettes 1 analogues. L'ensemble de caisse 2 et de brancards 3 peut être positionné à l'envers sur une palette, l'ensemble de pieds 4 étant positionné à l'envers sur la caisse 2, de telle sorte que l'anse de pliage du tube formant les pieds 4 est située au niveau de l'avant de la caisse 2 et que la traverse 7' des pieds est proche de la traverse 10 fixée contre la paroi inférieure arrière de la caisse 2.

Dans ces conditions, un orifice traversant 24 peut être prévu dans la traverse 10 pour le passage d'un lien, par exemple en matière synthétique, en vue d'attacher la traverse 7' des pieds 4 à l'ensemble de caisse 2 et de brancards 3 (voir figure 16A).

De la même manière, un orifice traversant 26 peut être prévu au niveau de la première extrémité de la tige formant l'axe 9, pour le passage d'un lien 25, par exemple en matière synthétique, en vue d'attacher la roue 16 au tube formant les brancards 3, de sorte que la roue 16 soit solidarisée à l'ensemble de caisse 2 et de brancards 3 (voir figure 16B).

La disposition de la brouette 1 à l'état démonté qui vient d'être décrite et représentée à la figure 15 permet, d'une part, de limiter la place occupée par une brouette 1 à l'état démonté et, d'autre part, d'éviter la perte d'un sous-élément.

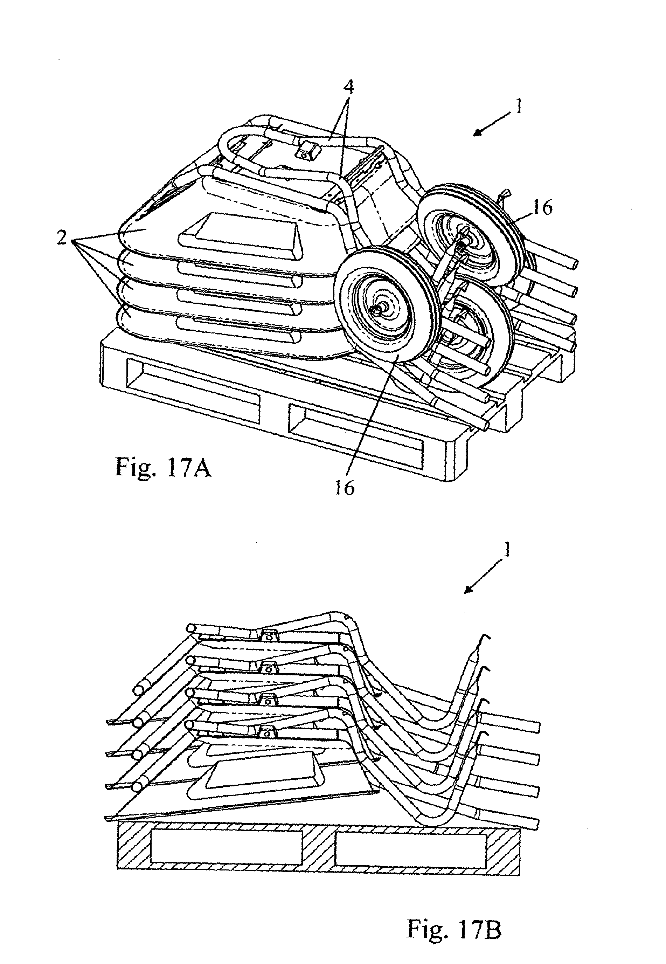

En outre, pour empiler plusieurs brouettes 1 à l'état démonté, il suffit de relier la roue 16 de deux brouettes 1 consécutives à un pied 4 opposé. Une telle disposition, représentée aux figures 17A et 17B permet une optimisation de l'encombrement d'un empilement ou gerbage de brouettes 1 selon l'invention.

Il est ainsi possible de superposer un grand nombre de brouettes démontées selon la figure 15, en les positionnant les unes sur les autres, de sorte que chaque caisses 2 est emboîtée sur la caisse de la brouette 1 démontée inférieure.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Brouette ou analogue empilable par sous-éléments prémontés, essentiellement constituée par un ensemble de caisse (2) et de brancards (3), par un ensemble de pieds (4) et de paliers de roue (5, 6) et par une roue (16) démontable, l'ensemble de caisse (2) et de brancards (3) étant muni de moyens d'assemblage avant et arrière (7 et 8), respectivement par déformation élastique et coopération de forme, destinés à coopérer avec des moyens (7', 8') correspondants de l'ensemble de pieds (4) et de paliers de roue (5, 6) et la roue (16) étant pourvue d'un axe (9) de montage sans outil sur les pieds (4), **caractérisée en ce que** l'axe (9) de montage sans outil de la roue (16) sur les pieds (4) est du type à engagement et à maintien dans les paliers (5, 6) correspondants par coopération de forme et se présente sous la forme d'une tige cylindrique pourvue à une première extrémité libre d'une tête (14) de dimension supérieure au diamètre de ladite tige, la tête (14) étant pourvue d'un moyen de maintien (15) de la roue (16) en position de montage.

2. Brouette, selon la revendication 1, **caractérisée en ce que** les extrémités libres de la tige formant l'axe (9) de montage sans outil de la roue (16) coopèrent avec les paliers de roue (5, 6) réalisés sous la forme de deux logements, comprenant chacun une face de montage (5', 6') perpendiculaire à l'axe (9) de montage sans outil de la roue (16) en position de service et avec laquelle coopère une extrémité libre correspondante de l'axe (9).

3. Brouette, selon la revendication 2, **caractérisée en ce que** la face de montage (5') du premier (5) des paliers de roue (5, 6) forme un palier semi-ouvert réalisé par un perçage débouchant (17) vers le bas en position de service et destiné à coopérer avec des méplats (18) prévus sur la tige formant l'axe (9) de montage sans outil de la roue (16), la longueur de la partie de tige (23) située entre le bord des méplats (18) tourné vers la tête (14) et le côté correspondant de la tête (14) étant au moins égale à la largeur desdits méplats (18) et **en ce que** la face de montage (6') du second (6) desdits paliers de roue (5, 6) présente un perçage (19) de diamètre correspondant à celui de la seconde extrémité libre de la tige formant l'axe (9) de montage sans outil de la roue (16).

4. Brouette, selon l'une quelconque des revendications 1 à 3, **caractérisée en ce que** le moyen de maintien (15) de la roue (16) en position de montage est un dispositif à encliquetage coopérant avec un moyen (20) correspondant prévu dans la paroi supérieure du logement du premier palier (5) concerné.

5. Brouette, selon la revendication 4, **caractérisée en ce que** le dispositif à encliquetage formant le moyen de maintien (15) de la roue (16) en position de montage comprend une patte (21) à déformation élastique avec une partie en saillie (22) coopérant avec un logement en creux formant le moyen (20) réalisé dans la paroi supérieure du logement du premier palier (5).

6. Brouette, selon la revendication 1, **caractérisée en ce que** les pieds (4) comprennent une traverse (7') formant le moyen d'assemblage destiné à coopérer par déformation élastique avec une languette élastique (7) fixée sous l'avant de la caisse.

7. Brouette, selon l'une quelconque des revendications 1 et 6, **caractérisée en ce que** les extrémités libres des pieds (4) sont sous la forme de crochets (8') constituant le moyen d'assemblage destiné à coopérer par forme avec le moyen d'assemblage (8) de l'ensemble de caisse (2) et de brancards (3) réalisé sous la forme de deux ouvertures (8) correspondantes réalisées dans une traverse (10) fixée contre la paroi inférieure arrière de la caisse (2) entre les deux brancards (3).

8. Brouette, selon la revendication 6, **caractérisée en ce que** la languette élastique (7) se présente sous la forme d'un profilé comportant au moins trois segments, à savoir un segment (11) destiné à la fixation du profilé à la caisse (2), un segment (12) de calage contre lequel la traverse (7') des pieds (4) exerce une contrainte en position de service de la brouette (1), et un segment (13) de guidage de la traverse (7') lors du montage de l'ensemble de pieds (4) et de paliers de roue (5, 6) sur l'ensemble de caisse (2) et de brancards (3).

9. Brouette, selon la revendication 6, **caractérisée en ce que** la languette élastique (7) est reliée à ou d'un seul tenant avec une traverse (7") fixée sous l'avant de la caisse et comporte deux segments, à savoir un segment (12) de calage contre lequel la traverse (7') des pieds (4) exerce une contrainte en position de service de la brouette (1), et un segment (13) de guidage de la traverse (7') lors du montage de l'ensemble de pieds (4) et de paliers de roue (5, 6) sur l'ensemble de caisse (2) et de brancards (3).

10. Brouette, selon la revendication 8, **caractérisée en ce que** l'angle formé par le segment (12) de calage avec le fond de la caisse (2) est un angle aigu et **en ce que** le segment (13) de guidage de la traverse (7'), fixé contre la paroi inférieure avant de la caisse (2), forme sensiblement un angle droit avec le segment (12) de calage et s'étend en direction de l'arrière de la brouette (1) en position de service.

## Claims

1. Wheelbarrow or similar stackable in premounted sub-elements, which is formed essentially by an assembly of a body (2) and shafts (3), an assembly of feet (4) and wheel bearings (5, 6) and a detachable wheel (16), the assembly of the body (2) and shafts (3) being provided with front and rear assembly means (7 and 8), respectively by elastic deformation and cooperation of shape, which are designed to cooperate with corresponding means (7', 8') of the assembly of feet (4) and wheel bearings (5, 6) and the wheel (16) is provided with an axle (9) for mounting without additional tools onto the feet (4), **characterised in that** the axle (9) for mounting the wheel (16) without additional tools onto the feet (4) is of the type which engages and is supported in the corresponding bearings (5, 6) by cooperation of shape and is in the form of a cylindrical rod provided at a first free end with a head (14) which is greater in size than the diameter of said rod, the head (14) being provided with a support means (15) for the wheel (16) in the mounting position.

2. Wheelbarrow according to claim 1, **characterised in that** the free ends of the rod forming the axle (9) for mounting the wheel (16) without additional tools cooperate with the wheel bearings (5, 6) which are in the form of two housings, each comprising a mounting face (5', 6') which is perpendicular to the axle (9) for mounting the wheel (16) without additional tools in a position of use and with which a corresponding free end of the axle (9) cooperates.

3. Wheelbarrow according to claim 2, **characterised in that** the mounting face (5') of the first (5) of the wheel bearings (5, 6) forms a semi-open bearing which is formed by a bore (17) opening towards the bottom in a position of use and designed to cooperate with flats (18) provided on the rod forming the axle (9) for mounting the wheel (16) without additional tools, the length of the part of the rod (23) located between the edge of the flats (18) turned towards the head (14) and the corresponding side of the head (14) being at least equal to the width of said flats (18), and **in that** the mounting face (6') of the second of said wheel bearings (5, 6) has a bore (19) with a diameter corresponding to that of the second free end of the rod forming the axle (9) for mounting the wheel (16) without additional tools.

4. Wheelbarrow according to any one of claims 1 to 3, **characterised in that** the support means (15) of the wheel (16) in a mounting position is a click-in device which cooperates with a corresponding means (20) provided in the upper wall of the housing of the first bearing (5) concerned.

5. Wheelbarrow according to claim 4, **characterised in that** the click-in device forming the support means (15) of the wheel (16) in a mounted position comprises an elastically deformable tab (21) with a projecting part (22) which cooperates with a hollow housing forming the means (20) formed in the upper wall of the housing of the first bearing (5).

6. Wheelbarrow according to claim 1, **characterised in that** the feet (4) comprise a crosspiece (7') which forms the assembly means intended to cooperate by elastic deformation with an elastic tongue (7) fixed below the front of the body.

7. Wheelbarrow according to any one of claims 1 and 6, **characterised in that** the free ends of the feet (4) are in the form of hooks (8') which form the assembly means designed to cooperate by shape with the assembly means (8) of the assembly of the body (2) and shafts (3) in the form of two corresponding openings (8) made in a crosspiece (10) which is fixed against the lower rear wall of the body (2) between the two shafts (3).

8. Wheelbarrow according to claim 6, **characterised in that** the elastic tongue (7) is in the form of a profiling which comprises at least three segments, namely a segment (11 ) designed for securing the profiling to the body (2), an adjusting segment (12) against which the crosspiece (7') of the feet (4) exerts a constraint in the position of use of the wheelbarrow (1 ), and a segment (13) for guiding the crosspiece (7') during the mounting of the assembly of feet (4) and wheel bearings (5 , 6) onto the assembly of the body (2) and shafts (3).

9. Wheelbarrow according to claim 6, **characterised in that** the elastic tongue (7) is connected to or is in one piece with a crosspiece (7") which is fixed below the front of the body and comprises two segments, namely an adjusting segment (12) against which the crosspiece (7') of the feet (4) exerts a constraint in the position of use of the wheelbarrow (1), and a segment (13) for guiding the crosspiece (7') during the mounting of the assembly of feet (4) and wheel bearings (5 , 6) onto the assembly of the body (2) and the shafts (3).

10. Wheelbarrow according to claim 8, **characterised in that** the angle formed by the adjusting segment (12) with the base of the body (2) is an acute angle and **in that** the segment (13) for guiding the crosspiece (7') fixed against the lower wall in front of the body (2) forms substantially a right angle with the adjusting segment (12) and extends in the direction of the rear of the wheelbarrow (1) in a position of use.

## Patentansprüche

1. Schubkarre oder ähnliches, stapelbar durch vormontierte Unterelemente, im Wesentlichen bestehend aus einer Gesamtheit von Wanne (2) und Trägern (3), aus einer Gesamtheit von Füßen (4) und Radlagern (5, 6) und aus einem demontierbaren Rad (16), wobei die Gesamtheit von Wanne (2) und Trägern (3) mittels vorderen und hinteren Zusammenfügemitteln (7 und 8) bzw. durch elastische Verformung und Form-Zusammenwirken befestigt ist, die zum Zusammenwirken mit entsprechenden Mitteln (7', 8') der Gesamtheit von Füßen (4) und Radlagern (5, 6) bestimmt sind, wobei das Rad (16) mit einer Achse (9) zur Montage ohne Werkzeug auf den Füßen (4) vorgesehen ist, **dadurch gekennzeichnet, dass** die Achse (9) zur Montage ohne Werkzeug des Rades (16) auf den Füßen (4) zum Eingreifen und zum Halten in den entsprechenden Lagern (5, 6) durch Form-Zusammenwirken gedacht ist und die Form einer zylindrischen Welle einnimmt, die an einem ersten freien Ende eines Kopfes (14) mit einer Dimension größer als der Durchmesser der Welle versehen ist, wobei der Kopf (14) mit einem Haltemittel (15) des Rades (16) in Montageposition versehen ist.

2. Schubkarre nach Anspruch 1, **dadurch gekennzeichnet, dass** die freien Enden des Schafts, der die Achse (9) zur Montage ohne Werkzeug des Rades (16) bildet, mit den Radlagern (5, 6) zusammenwirken, die in der Form von zwei Unterbringungsräumen realisiert sind, die jeweils eine Montagefläche (5', 6') senkrecht zur Achse (9) zur Montage ohne Werkzeug des Rades (16) in Wartungsposition, und mit der ein entsprechendes freies Ende der Achse (9) zusammenwirkt, umfassen.

3. Schubkarre nach Anspruch 2, **dadurch gekennzeichnet, dass** die Montagefläche (5') des ersten (5) der Radlager (5, 6) ein halboffenes Lager bildet, das durch eine Bohrung (17) realisiert ist, die in Serviceposition nach unten offen ist und zum Zusammenwirken mit Seitenflächen (18) bestimmt ist. die auf der Welle vorgesehen sind, die die Achse (9) zur Montage ohne Werkzeug des Rades (16) bildet, wobei die Länge des Wellenteils (23), das zwischen dem Rand der Seitenflächen (18), der in Richtung des Kopfes (14) gedreht ist, und der dem Kopf (14) entsprechende Seite liegt, mindestens gleich der Länge der Seitenflächen (18) ist und **dadurch**, dass die Montagefläche (6') des zweiten (6) der Radlager (5, 6) eine Bohrung (19) von einem Durchmesser entsprechend demjenigen des zweiten freien Endes des Schafts, der die Achse (9) zur Montage ohne Werkzeug des Rades (16) bildet, aufweist.

4. Schubkarre nach einem der Ansprüche 1 bis 3, **dadurch gekennzeichnet, dass** das Haltemittel (15) des Rades (16) in Montageposition eine Einrastvorrichtung ist, die mit einem entsprechenden Mittel (20) zusammenwirkt, das in der Wand oberhalb des Unterbringungsraums des ersten betroffenen Lagers (5) vorgesehen ist.

5. Schubkarre nach Anspruch 4, **dadurch gekennzeichnet, dass** die Einrastvorrichtung, die das Haltemittel (15) des Rades (16) in Montageposition bildet, eine Klammer (21) zur elastischen Verformung mit einem hervorspringenden Teil (22) umfasst, der mit einem Unterbringungshohlraum zusammenwirkt, der das Mittel (20) bildet, das in der oberen Wand des Unterbringungsraums des ersten Lagers (5) realisiert ist.

6. Schubkarre nach Anspruch 1, **dadurch gekennzeichnet, dass** die Füße (4) einen Querträger (7') umfassen, der das Zusammenfugemittel bildet, das zum Zusammenwirken durch elastische Verformung mit einer elastischen Zunge (7) bestimmt ist, die unter dem Bug der Wanne befestigt ist.

7. Schubkarre nach einem der Ansprüche 1 und 6, **dadurch gekennzeichnet, dass** die freien Enden der Füße (4) in Form von Haken (8') vorliegen, die das Zusammenfügemittel aufbauen, das zum Form-Zusammenwirken mit dem Zusammenfügemittel (8) der Gesamtheit von Wanne (2) und Trägern (3) bestimmt ist, das in der Form von zwei entsprechenden Öffnungen (8) realisiert ist, die in einem Querträger (10) realisiert sind, der an der unteren Wand hinter der Wanne (2) zwischen den beiden Trägern (3) befestigt ist.

8. Schubkarre nach Anspruch 6, **dadurch gekennzeichnet, dass** die elastische Zunge (7) die Form von einem Profil aufweist, das mindestens drei Abschnitte umfasst, nämlich einen Abschnitt (11), der zur Befestigung des Profils an der Wanne (2) bestimmt ist, einen Keilabschnitt (12), gegen den der Querträger (7') der Füße (4) in der Betriebsposition der Schubkarre (1) eine Spannung ausübt, und einen Führungsabschnitt (13) des Querträgers (7') während der Montage der Gesamtheit von Füßen (4) und Radlagern (5, 6) an der Gesamtheit von Wanne (2) und Trägern (3).

9. Schubkarre nach Anspruch 6, **dadurch gekennzeichnet, dass** die elastische Zunge (7) in einem Stück an einen Querträger (7")angeknüpft oder damit verknüpft ist, der unter dem Bug der Wanne befestigt ist und zwei Abschnitte umfasst, nämlich einen Keilabschnitt (12), auf den die Querträger (7') der Füße (4) in der Betriebsposition des Schubkarrens (1) eine Spannung ausüben, und einen Führungsabschnitt (13) des Querträgers (7') während der Montage der Gesamtheit von Füßen (4) und Radlagern (5, 6) an die Gesamtheit von Wanne (2) und Träger (3).

10. Schubkarre nach Anspruch 8, **dadurch gekennzeichnet, dass** der Winkel, der von dem Keilabschnitt (12) mit dem Boden der Wanne (2) gebildet wird , ein spitzer Winkel ist und **dadurch**, dass der Führungsabschnitt (13) des Querträgers (7'), der an der unteren Wand vor dem Wanne (2) befestigt ist, im Wesentlichen einen rechten Winkel mit dem Keilabschnitt (12) bildet und sich in Betriebsposition in Rückwärtsrichtung der Schubkarre (1) erstreckt.
